# EUROPEAN PATENT SPECIFICATION

(11) **EP 0 982 112 B1**
(45) Date of publication and mention of the grant of the patent: **23.10.2002**
(21) Application number: 99830510.6
(22) Date of filing: 05.08.1999
(51) Int. Cl.: B29C 45/16

(54) **A plate unit for transforming rotating-plate injection presses into rotating-insert injection presses**
Platteneinheit zum Umformen von Spritzgiesspressen mit Drehplatte zu Spritzgiesspressen mit Dreheinsatz
Unité de plaque pour transformer des presses d'injection à plaque rotative en presses d'injection à insert rotatif

(30) Priority: 07.08.1998 IT RM980530
(43) Date of publication of application: 01.03.2000
(73) Proprietor: FATAR S.r.l., 62019 Recanati (MC) (IT)
(72) Inventor: Stortoni, Renzo, Contrada Addolorata, 62019 Recanati (IT)
(74) Representative: Sneider, Massimo

(56) References cited:
- DE-A- 4 127 621
- DE-C- 3 633 884
- US-A- 3 914 081
- US-A- 3 977 661
- THEISS E: "DREHEN, UMSETZEN, SCHIEBEN" PLASTVERARBEITER,DE,ZECHNER UND HUETHIG VERLAG GMBH. SPEYER/RHEIN, vol. 48, no. 6, page 62-63 XP000721550 ISSN: 0032-1338

## Description

### Technical field

This invention relates to a plate unit for transforming rotating-plate injection presses into rotating-insert injection presses, and vice versa, for the injection molding of plastic objects.

### Background of art

Injection molding is the best thermoplastic molding technique for producing objects weighing between 1 mg and over 10 kilos, by means of work cycles lasting between a few seconds and several minutes.

The raw material is introduced through a hopper in the form of granules or, more rarely, powder, into a rotating heated screw. The movement of the screw carries it to the tip and along the way the granules melt because of the heat and the friction. The melt collects into a pad at the tip of the screw, which pushes the screw backwards. If the pad of material thus produced is sufficient for the production, the screw is stopped, made to move forward hydraulically and the melt compressed into a mold. The pressure thus generated, amounting to several hundred bars, is maintained until the melt solidifies inside the mold; the mold is then opened and the item thus produced is removed from the mold by means of ejection pins or plates.

The mold is generally fixed to the mold-closing unit by mechanical means; this unit opposes the force generated by the injection pressure inside the mold.

The above technique relates to the molding of a single component or colour; in the case of multicolour or multicomponent molding more complex techniques are required.

Multicolour injection molding produces objects with layers or areas of different colours or plastic materials fed into the mold one after the other. The first cavity of the mold is filled, after which the mold half is changed and the second batch of plastic is injected; thus, it is possible to weld the materials but also to make movable assemblies, for example, ball-and-socket joints, when the melting points of the various components are too different to allow adhesion.

In the multicolour or multicomponent molding technique, the ejector half of the mold is mounted onto a rotating plate so that, after the injection of the first material by the first injection set, the mold opens, the rotating plate turns with the molded object until it is placed in position with a female fitting with a different form on the stationary half; the ejector half then closes and the second injection set injects the second material. At the completion of the process the second material (of a different colour, for example) will be molded over the first, on the face towards the stationary half, either entirely or on a part of it.

This technique is viable only when the second material must be molded only over the face toward the stationary half of the mold because the object, after the first phase of the process, rotates with the mold remaining in its place on the ejector half.

If the object must be molded over with the second material also on the face towards the ejector half (or over its entire surface) the moving insert technique must be used. In this technique the stationary and ejector halves of the mold have different impressions, usually made by ideally dividing the mold halves into two quadrants; on the front face of the ejector half, and especially around the female fittings of the molds, there is a housing for an insert with reliefs capable of firmly holding the molded object; the insert is integral with a plunger which translates it forward, extracting it from the ejector half, and then rotates it by a predetermined arc of a circle, usually 180°, until the molded object (integral with the aforementioned moving insert) reaches the position of the various impressions on the mold halves. In this position the plunger withdraws, the insert returns into its housing on the ejector half, the molded objects enter the predetermined housings, the ejector half closes and the second material is injected, thus covering the surface of the molded object also on the face toward the ejector half, either totally or partially. Practically speaking, the ejector performs the following operation, in a mechanical and automated manner: it removes the object from the (stationary and ejector) halves and arranges it inside different stationary and ejector halves, so that its surface may be molded over, either entirely or partially.

The US Patent 3.914.081 (Aoki Kitashi) describes an injection press provided with two sets of metal molds and an ejector plate, used with alternating and rotating movement, for producing multicolour objects by injection, based on a process comprising the injection of the metal of colour one in the first metal mold, so as to obtain a first object, which is then placed on the ejector plate, by rotating which the object may be transferred to the second mold, which then closes and into which the material of colour two is then injected. The patent De 4127621 A 1 describes a machine for manufacturing toothbrushes, in which the injection mold is designed so as to rotate the object, so that in the first stage of the injection the basic body of the toothbrush is made, and in the second stage the basic body may undergo a further injection process transforming it into the finished product. The injection mold features a fixed plate and an inversion element fastened to the inside end of the sliding shaft, guided, in a revolving manner, in the plate on the side of the ejector; the inverter and the mobile plate are designed so that the molding pockets, the ends of which form a support, are placed more or less one facing the other, and with the above-mentioned ends on the inverter; the molding sections for the brush are likewise made.

The Patent DE 36 33884C1 describes a procedure and device for producing elastic command sheaths in fields for medium and high voltage connectors, featuring various layers of partial plastic objects shaped like sheaths and which may be inserted on the electric connectors by means of layered injection-melting, in which a series of nuclei is made to rythmically advance through a series of molding cavities and in which inside the said cavities are provided, also by means of injection-melting, subsequent partial objects in the stratification.

The US patent US 3.977.661 describes a machine for molding plastic materials comprising two mold-blocking units, each of which features a stationary yoke and a fixed yoke assigned to a rotating platform used for transporting an open mold between the first and the second workstations; the rotating platform is installed so as to rotate around an axis that is parallel to the functioning direction of the mold blocking units and between the stationary and mobile yokes, to extend between the two workstations; a rotating plunger is mounted on a stationary yoke co-axially with the axis of the rotating platform, in order to rotate the rotating platform.

In the item turning, transforming, pushing, it is highlighted that the molding technique variations are determined by both the item to be processed, with special regard to the price of the item and the cost-effectiveness of the process.

The process is briefly described with the fifth wheel process is briefly described used in the event no space is needed to be created on the ejector side, the initially pressure molded object remains on the core and, by means of the fifth wheel lathe, is carried towards the second cavity for the final pressing: the fifth wheel is fastened to the central shaft which, when the mold is open, is pushed out through the machine's central hydraulic ejector on the ejector side. A toothed support moved by a hydraulic cylinder rotates the shaft with the fifth wheel by 180°. After having been withdrawn by the ejector part, the machine may close once again.

None of the above-mentioned patents and processes allow the realization of the transformation of rotating-plate injection presses into rotating-insert injection presses.

Currently , in order to carry out the techniques briefly described above you need two different machines, which means consederably increased costs for the manufacturer , extending the machine amortizations period and negatively affecting the market flexibility of the manufactures not possessing both the machines.

### Disclosure of invention

The object of the invention is to provide a machine for easily and rapidly transforming a rotating-plate machine into a rotating-insert machine, and vice versa, and to transfer the rotary motion from the rotating plate to the rotating insert which, as described above, removes the objects from the mold, rotates them and places them in position with the different impressions.

This object is achieved according to the invention by a plate unit as defined in claim 1.

Particular embodiments of the invention are the subject of the dependent claims.

The unit comprises a round plate with a hole in the centre and a flange connected to the machine's rotation system, composed, for example, of two vertical racks engaging a toothed wheel integral with a cylinder, inside which runs a plunger whose head may exit the cylinder; in the centre of the ejector half there is a hole, whose diameter is such as to allow the cylinder to pass through, so that the plunger head may be firmly connected to the rotating insert by means of bolts or the like. The machine's rotation system transmits the motion to the rotating insert, because the latter is integral with the head of the plunger, which plunger rotates with the cylinder, while a hydraulic system makes the plunger exit the cylinder for a length such as to allow the rotating insert to withdraw the molded objects from the impression, rotate them, place them in position with other impressions and, after the plunger has reentered the cylinder, place them against the other impressions; the ejector half closes against the stationary half and the second material is injected according to the traditional technique.

The transformation of a rotating-plate machine into a rotating-insert machine, according to the present invention, is achieved by replacing the rotating plate to which the mold is fastened with a perforated plate and rotating flange integral with the above mentioned cylinder; the remainder of the equipment and components, including the control system and software must be appropriately updated.

### A brief description of the drawings

A specific embodiment of the invention will now be described by way of example with reference to the accompanying drawing in which:

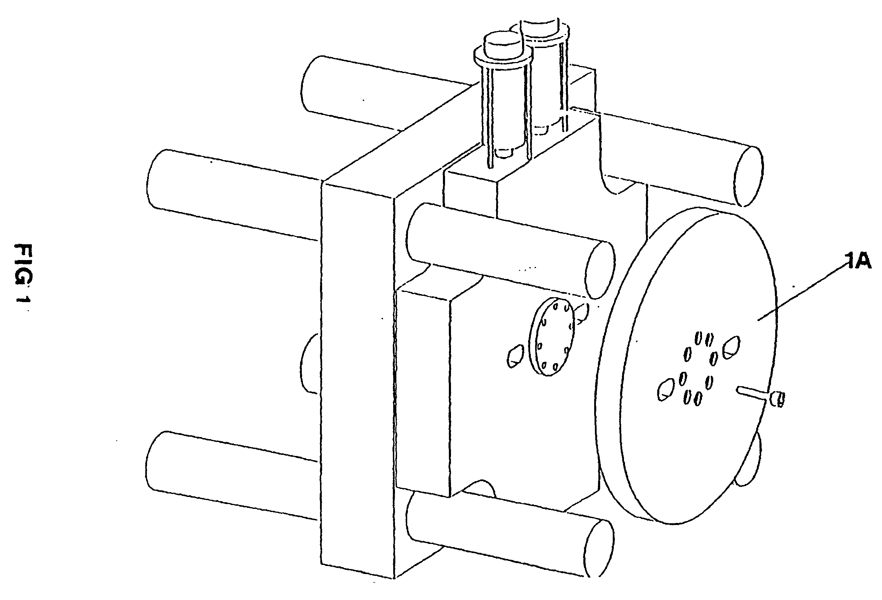

Figure 1 shows a 3D diagram of the plate unit of the rotating-plate version;

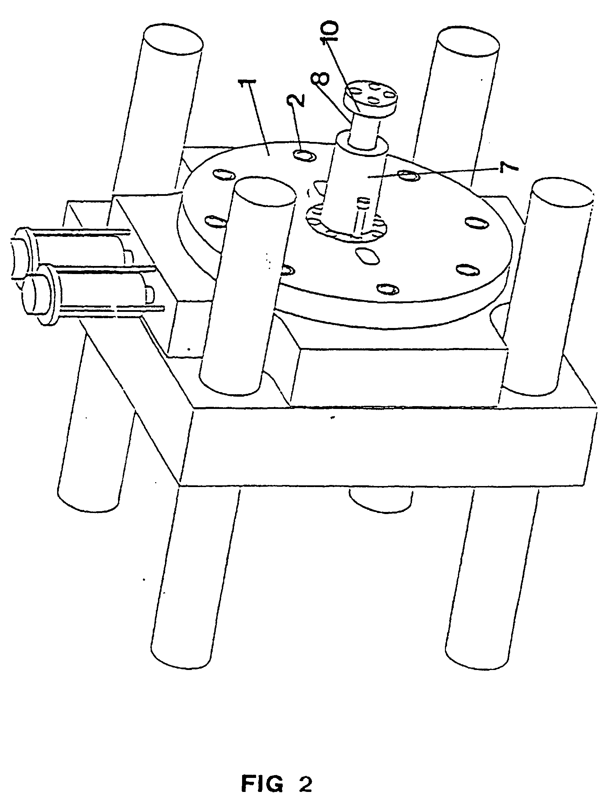

Figure 2 shows a 3D diagram of the plate unit and relative plunger according to the present invention;

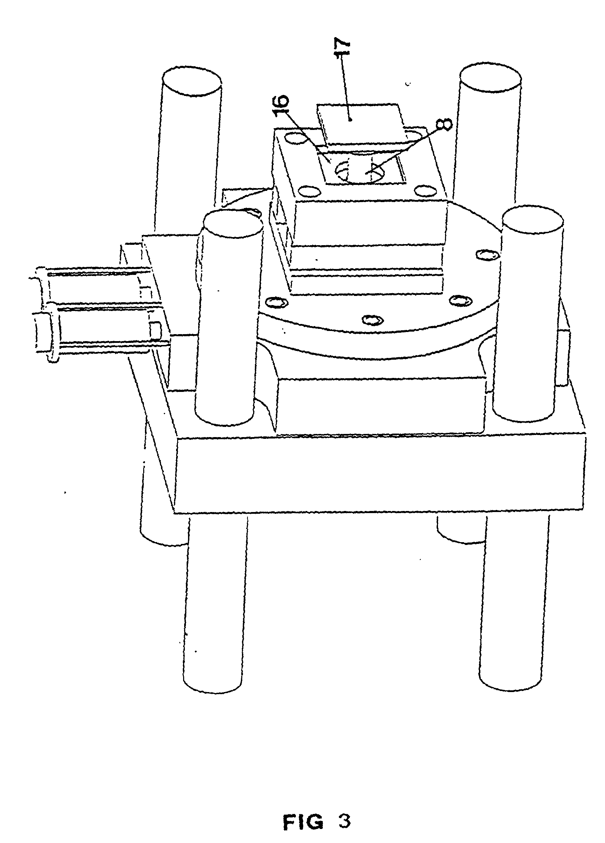

Figure 3 shows a 3D diagram of the plate unit and relative plunger, as per figure 2, with the application of the rotating insert;

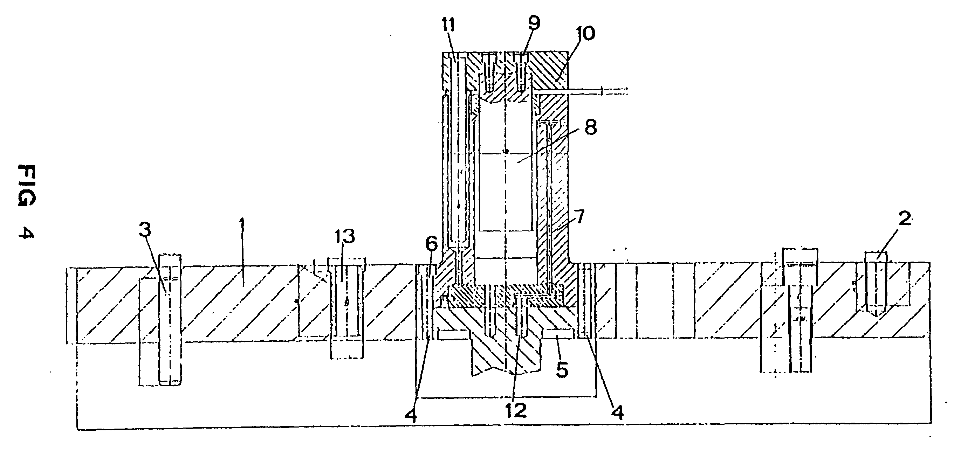

Figure 4 shows a longitudinal section of the cylinder with its plunger and round connecting plate;

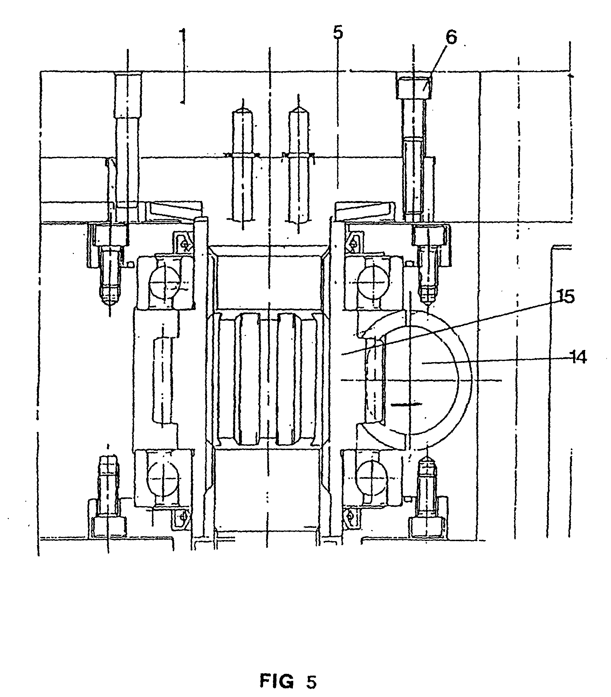

Figure 5 shows a longitudinal section of the rotation transmission system to the rotating insert.

### Detailed description of preferred embodiment

Referring to the drawing the injection press substantially comprises the same components as the injection presses available on the market; the rotating round plate (1a) receiving the motion from the rotating system of the machine, with which the ejector half is made integral, is replaced by a round plate (1) made integral by means of screws (2) and pins (3) with the ejector half moving system.

The plate (1) has a hole (4) with a rotating flange (5) driven by the machine's rotation system, generally comprising two racks (14) which, by moving vertically upwards or downwards, and engaging a toothed wheel (15) integral with the flange (5), make it rotate to the left or the right.

The rotating flange (5) is made integral (by means of the screws (6)) with the cylinder (7) containing the plunger (8), at the top of which there is a support (10) with pins (11), which is made integral with the rotating insert (17) of the mold by means of bolts (9), which rotating insert is mechanically fastened to the plate (1) and positioned by means of the bushes (13).

The stroke of the plunger (8) is controlled in both extension and retraction by the hydraulic circuit (12) connected to normal pumps.

The height of the cylinder (7) may vary according to the type of mold to be mounted, so that in operating conditions, the rotating insert (17) may return entirely into its housing (16) on the front of the moving mold. In the preferred embodiment, the height of the cylinder (7) is 160 mm, while that of the support (10) for fastening the rotating insert is 35 mm, with 5 mm of clearance between the cylinder (7) and the support (10). The hole in the plate (1) through which the cylinder (7) may pass has a diameter of 172 mm, while the diamter of the plate is 800 mm.

As previously mentioned this invention is for easily and rapidly transforming a rotating-plate press into a rotating-insert press, simply by replacing the plate without the central hole (1a) with the plate (1) with a hole (4) and by mounting the above mentioned cylinder which, thanks to the rotating flange (5), may receive the rotary motion from the rotation system of the press, completing it with the motion of translation of the insert, by means of the plunger (8).

With regard to the command and control devices of the machine, no total additions or reprogramming is required, but simple updates.

## Claims

1. A plate unit for transforming rotating-plate injection presses into rotating-insert injection presses and vice versa, for the injection molding of plastic objects, comprising a plate (1) for assembling the molds, a cylinder (7), a plunger (8) housed inside the cylinder (7) ,a support (10) for fastening a rotating insert (17) integral with the head of the plunger (8), and a hydraulic system (12) for moving the plunger (8), wherein the plate (1) for assembling the molds features a hole in the centre and consists of a rotating flange (5) integral with the cylinder (7) such as to enable the rotating insert (17) to remove the molded objects , rotate them and place them in the direction of the other molds, and once the plunger (8) has returned inside the cylinder (7), place them inside the other molds.

2. A plate unit for transforming rotating-plate injection presses into rotating-insert injection presses as claimed in Claim 1, wherein the plate (1) is integral with mold driving means by means of screws (2) and pins (3) and with a hole (4) in the centre, inside which hole (4) there is the rotating flange (5) integral with the cylinder (7) by means of screws (6), inside which cylinder (7) there is the plunger (8), on whose head is fastened, by means of bolts (9), the support (10), which is integral with the mold's rotating insert (17) by means of the pins (11).

3. A plate unit for transforming rotating-plate injection presses into rotating-insert injection presses as claimed in the preceding claims, wherein the rotating flange (5) receives the motion from the press devices driving the plate (1), namely the racks (14) engaging the toothed wheel ( 15).

4. A plate unit for transforming rotating-plate injection presses into rotating-insert injection presses as claimed in the preceding claims, wherein the plunger (8) is driven by means of the hydraulic system (12), in a housing provided for on the front face of the moving mold.

5. A plate unit for transforming rotating-plate injection presses into rotating-insert injection presses as claimed in the preceding claims, wherein the height of the cylinder (7) is such that, in operating conditions, the rotating insert (17) may withdraw entirely within its housing (16) on the front face of the moving mold.

## Patentansprüche

1. Eine Platteneinheit für die Umwandlung der Einspritzpresse mit Drehplatte in eine Einspritzpresse mit Dreheinsatz und umgekehrt, für die Einspritzformgebung von Kunststoffgegenständen, versehen mit einer eine Platte (1) für den Zusammenbau der Formen, einem Zylinder (7), einem im Innern des Zylinders (7) gelagerten Kolben (8), einer Halterung (10) für die Befestigung eines integralen Dreheinsatzes mit dem Kopf des Kolbens (8) und einem Hydrauliksystem (12) für die Bewegung des Kolbens (8),
bei der die Platte (1) für den Zusammenbau der Formen mit einem Loch in der Mitte versehen ist und aus einem Drehflansch (5) besteht, der ein Ganzes mit dem Zylinder (7) bildet, damit der Dreheinsatz dazu in der Lage ist, die geformten Gegenstände zu entfernen, zu drehen und in Richtung anderer Gegenstände abzusetzen, und sie im Innern anderer Formen zu positionieren, sobald der Kolben (8) in den Zylinder (7) zurückgekehrt ist.

2. Eine Platteneinheit für die Umwandlung der Einspritzpressen mit Drehplatte in Einspritzpressen mit Dreheinsatz, gemäß Anspruch 1, bei der die Platte (1) ein Ganzes bildet mit den Vorrichtungen, die die Form über Schrauben (2) und Bolzen (3) führen, versehen mit einem Loch (4) in der Mitte, in dem sich ein Drehflansch (5) befindet, der über Schrauben (6) ein Ganzes mit dem Zylinder (7) bildet; im Innern des Zylinders (7) befindet sich der Kolben (8) auf dessen Kopf die Halterung (10) mit Mutterschrauben befestigt ist, - Halterung, die über Schrauben (11) ein Ganzes mit dem Dreheinsatz der Formen (17) bildet.

3. Eine Platteneinheit für die Umwandlung der Einspritzpressen mit Drehplatte in Einspritzpressen mit Dreheinsatz, gemäß den vorstehenden Ansprüchen, bei der der Drehflansch (5) bewegt wird von der Anordnung der Presse, die die Platte führt, d.h., von der Zahnstange (14), die in das Zahnrad (15 eingreift.

4. Eine Platteneinheit für die Umwandlung der Einspritzpressen mit Drehplatte in Einspritzpressen mit Dreheinsatz, gemäß den vorstehenden Ansprüchen, bei der der Kolben (8) von den Vorrichtungen des Hydrauliksystems (12) in eine Lagerung geführt wird, die sich auf der Vorderseite der in Bewegung befindlichen Form befindet.

5. Eine Platteneinheit für die Umwandlung der Einspritzpressen mit Drehplatte in Einspritzpressen mit Dreheinsatz, gemäß den vorstehenden Vorrichtungen, bei der die Höhe des Kolbens (7) so bemessen ist, daß der Dreheinsatz (17) bei Betrieb vollständig mit seiner Lagerung (16) auf die Vorderseite der in Bewegung befindlichen Form herausgezogen werden kann.

## Revendications

1. Une plaque pour transformer les presses à injection à plaque tournante en presses à injection à élément rapporté tournant et vice-versa, pour mouler par injection des objets en matière plastique, comprenant une plaque (1) pour assembler les moules, un cylindre (7), un piston (8) logé dans le cylindre (7), un support (10) pour maintenir un élément rapporté tournant (17) faisant corps avec la tête du piston (8), où la plaque (1) d'assemblage des moules comprend un orifice central et consiste en une collerette tournante (5) fixée au cylindre (7), afin de permettre à l'élément rapporté tournant (17) de retirer les objets moulés, de les faire pivoter et de les placer dans la direction des autres moules, et lorsque le piston (8) est retourné à l'intérieur du cylindre (7), de les placer à l'intérieur des autres moules.

2. Une plaque pour transformer les presses à injection à plaque tournante en presses à injection à élément rapporté tournant, selon la revendication 1, où la plaque (1) est fixée à l'élément d'entraînement des moules par des vis (2) et des chevilles (3) et comprenant un orifice (4) central; à l'intérieur de cet orifice (4) se trouve une collerette tournante (5) rattachée au cylindre (7) par des vis (6) ; à l'intérieur du cylindre (7) se trouve le piston (8) sur la tête duquel est fixé par des écrous (9) le support (10), qui est fixé à l'élément rapporté (17) tournant des moules par les chevilles (11).

3. Une plaque pour transformer les presses à injection à plaque tournante en presses à injection à élément rapporté tournant, selon les revendications précédentes, où la collerette tournante (5) est mise en mouvement par les dispositifs de la presse qui entraînent la plaque (1), c'est-à-dire les engrenages (14) montés sur la roue dentée (15).

4. Une plaque pour transformer les presses à injection à plaque tournante en presses à injection à élément rapporté tournant, selon les revendications précédentes, où le piston (8) est entraîné par un système hydraulique (12), dans un logement situé à l'avant du moule mobile.

5. Une plaque pour transformer les presses à injection à plaque tournante en presses à injection à élément rapporté tournant, selon les revendications précédentes, où la hauteur du cylindre (7) est telle que, en conditions de fonctionnement, l'élément rapporté tournant (17) peut rentrer entièrement dans son logement (16) à l'avant du moule mobile.
